# EUROPEAN PATENT APPLICATION

(11) **EP 0 840 506 A2**
(43) Date of publication of application: **06.05.1998**
(21) Application number: 97308552.5
(22) Date of filing: 27.10.1997
(51) Int. Cl.: H04N 5/907

(54) **Picture data reading and writing method and apparatus**

(30) Priority: 30.10.1996 JP 287834/96
(71) Applicant: SONY CORPORATION, Tokyo (JP)
(72) Inventor: Kobayashi, Toshiharu, Shinagawa-ku, Tokyo (JP); Kawaguchi, Moriyuki, Shinagawa-ku, Tokyo (JP)
(74) Representative: Ayers, Martyn Lewis Stanley

(57) **Abstract**

The invention provides a picture data writing apparatus and method, a picture data reading apparatus and method, and a picture data writing and reading apparatus and method and by which a moving picture, a still picture and sound data can be written and read out in combination into and from a memory card (102), and a memory card (102) on which a moving picture, a still picture and sound data are written in combination. To still picture data fetched by a CCD (122), an identification code representing that the data is still picture data is added by a DSP (124), and resulting data is compressed in accordance with the JPEG system by a data compression circuit (125) and written into a memory card (102). To moving picture data fetched by a CCD (122), an identification code representing that the data is moving picture data is added by a DSP (122), and resulting data is compressed in accordance with the MPEG system by a data compression circuit (129) and written into the memory card (102). To sound data, an identification code representing that the data is sound data is added by a DSP (134), and resulting data is compressed in accordance with the WAVE system by a data compression circuit (135A,135B) and written into the memory card (102).

## Description

This invention relates to a picture data writing apparatus and method, a picture data reading apparatus and method, a picture data writing and reading apparatus and method and a memory card, and more particularly to a picture data writing apparatus and method, a picture data reading apparatus and method, a picture data writing and reading apparatus and method and a memory card by which moving picture data, still picture data and sound data can be written or read out in combination.

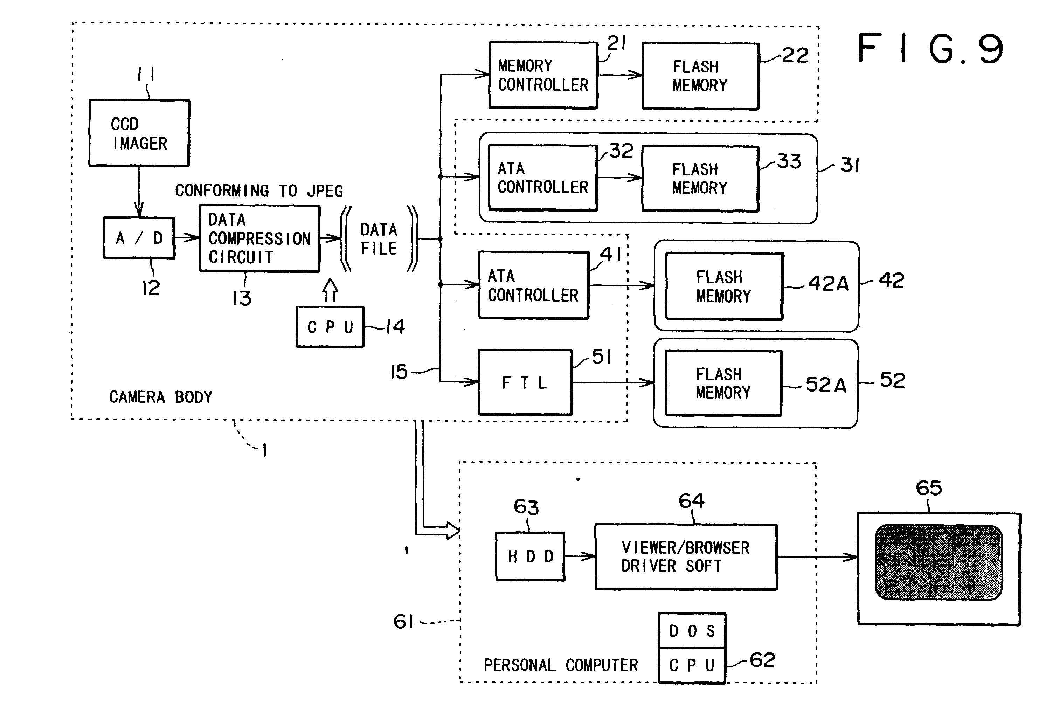

FIG. 9 illustrates a principle of a ordinary digital still camera. A CCD (charge coupled device) imager 11 is provided on a camera body 1 so that a picture of an imaging object may be imaged. An output of the CCD imager 11 is converted from an analog signal into a digital signal by an A/D converter 12 and then compressed in accordance with, for example, a JPEG (Joint Photographic Experts Group) system by a data compression circuit 13. The compressed data from the data compression circuit is converted, for each still picture, into a data file, which can be managed by a personal computer 7, by a CPU 14.

Where a flash memory 22 is built in the camera body 1, the data file is written into the flash memory 22 serving as an IC memory card (hereinafter referred to simply as memory card) through a memory controller 21.

Where no flash memory is built in the camera body 1, the data file is written into a flash memory loaded in the camera body 1 from the outside. Three types of flash memories are available for such a flash memory as is loaded into the camera body 1 from the outside. In particular, a Compact Flash (Small PC Card) memory 31, an SSFDC memory 42 and a Miniature Card 52 (which are all trademarks) can be used.

The Compact Flash memory 31 has an ATA controller (PC/AT Attached) 32 and a flash memory 33 built in the inside thereof. The ATA controller 32 writes the data file supplied thereto from the camera body 1 into the flash memory 33.

In order to write the data file into a flash memory 42A built in the SSFDC memory 42, an ATA controller 41 is provided on the camera body 1 side. The ATA controller 41 writes the data file into the flash memory 42A of the SSFDC memory 42.

On the other hand, in order to write the data file into a flash memory 52A built in the Miniature Card 52, an FTL (File Translation Layer) 51 is loaded as application software into the CPU 14. The data file is written into the flash memory 52A by the FTL 51.

Where writing into any of the flash memories is to be performed, an ATA/IDE (Intelligent Drive Electronics) interface 15 is provided as an interface, and interface processing is executed by the ATA/IDE interface 15. Due to provision of the interface, the CPU 14 can process in a similar manner as in a case wherein a data file is written into a hard disk drive.

The data file written in a flash memory in this manner is read out such that, where the flash memory is the flash memory 22 built in the camera body 1, the data written in the flash memory 22 is read out and transferred to a personal computer 61 via an interface such as, for example, an RS232C interface or an IrDA interface. Meanwhile, where the flash memory is the Compact Flash memory 31, SSFDC memory 42 or Miniature Card 52 which can be loaded from the outside, it is removed from a card slot of the camera body 1 and loaded into a card slot of the personal computer 61. The personal computer 61 reads out data suitably from the flash memory loaded therein.

The personal computer 61 functions with a predetermined DOS (Disc Operation System) and includes a viewer (viewing software) 64 corresponding to a compression system or a file format corresponding to each flash memory. By the software, a CPU 62 can read out data from the flash memory in a similar manner as in a case wherein it reads out data from a hard disk drive 63, and can output the data to a display unit 65 so that it may be displayed on the display unit 65.

It is to be noted that most of memory cards for personal computers are based on the standards of the PCMCIA (Personal Computer Memory Card International Association)/JEIDA (Japanese Enhanced Graphics Adapter). Such memory cards have a size substantially equal to that of a credit card. On the other hand, since the Compact Flash memory 31, SSFDC memory 42 and Miniature Card 52 are memory cards (the memory cards may be hereinafter referred to suitably as small size memory cards) of the size of approximately 3.5 cm x 4 cm (similar to the magnitude of the stamp size), actually in order to load any of the small size memory cards into a card slot of the personal computer 61, an adapter is required.

In a ordinary digital still camera, it is presupposed that, in order to read out a picture written in a flash memory in this manner, a personal computer is used. Therefore, the ordinary digital still camera is disadvantageous in that it is difficult for an ordinary user to display and enjoy a picture imaged by a digital still camera easily on a television receiver or the like in a home.

However, where an NTSC encoder is built in a digital still camera, it is possible to enjoy a still picture in a home by connecting a signal outputted from an NTSC signal output terminal of the digital still camera to a television receiver. However, the digital still camera of the type just mentioned is disadvantageous in that, where it is carried out by one of families, if only a flash memory remains, it is not simple to read the flash memory.

Further, usually what can be written into and read out from a digital still camera is a still picture only. A digital still camera which allows writing and reading out of a still picture and sound is disclosed in Japanese Patent Laid-Open Application No. Heisei 8-98124. However, a picture which can be extracted from the digital still camera is a still picture after all and not a moving picture.

According to a first aspect of the present invention, there is provided a picture data writing apparatus for writing fetched picture data into a memory card, comprising first fetching means for fetching picture data, second fetching means for fetching sound data, identification code application means for applying a first identification code to the fetched picture data when the fetched picture data is moving picture data but applying a second identification code to the fetched picture data when the fetched picture data is still picture data and applying a third identification code to the fetched sound data, and writing means for writing the moving picture data, still picture data and/or sound data into the memory card together with the corresponding identification code or codes.

According to a second aspect of the present invention, there is provided a picture data writing method for writing fetched picture data into a memory card, comprising the steps of fetching picture data, fetching sound data, applying a first identification code to the fetched picture data when the fetched picture data is moving picture data but applying a second identification code to the fetched picture data when the fetched picture data is still picture data and applying a third identification code to the fetched sound data, and writing the moving picture data, still picture data and/or sound data together with the corresponding identification code or codes into the memory card.

In the picture data writing apparatus and the picture data writing method, a first identification code, a second identification code and a third identification code may be applied to moving picture data, still picture data or sound data, respectively, to write the data into a memory card. Consequently, data of the three kinds can be discriminated readily from the identification codes and can be written into a memory card in combination.

According to a third aspect of the present invention, there is provided a memory card in which fetched picture data is recorded, wherein moving picture data, still picture data and/or sound data compressed in accordance with a predetermined method are recorded together with a data identification code or codes for identification among the data in said memory card.

With the memory card, since each of moving picture data, still picture data and sound data is recorded with a data identification code for identification thereof added thereto, the data can be suitably identified and read out.

According to a fourth aspect of the present invention, there is provided a picture data reading apparatus for reading out a memory card in which moving picture data, still picture data and/or sound data compressed by a predetermined method or methods are recorded together with a data identification code or codes for identification among the data, comprising reading means for reading out data from the memory card, first decompression means for decompressing the moving picture data read out by the reading means, second decompression means for decompressing the still picture data read out by the reading means, third decompression means for decompressing the sound data read out by the reading means, and supply means for supplying the read out moving picture data, still picture data and/or sound data to the first decompression means, second decompression means and/or third decompression means, respectively, in accordance with the identification code or codes.

According to a fifth aspect of the present invention, there is provided a picture data reading method for reading out a memory card in which moving picture data, still picture data and/or sound data compressed by a predetermined method or methods are recorded together with a data identification code or codes for identification among the data, comprising the steps of reading out data from the memory card, decompressing the moving picture data read out, decompressing the still picture data read out, decompressing the sound data read out, and supplying the read out moving picture data, still picture data and/or sound data in accordance with the identification code or codes so that the data may be decompressed in the first decompression step, second decompression step and/or third decompression step, respectively.

In the picture data reading apparatus and the picture data reading method, decompression processing can be performed for each of moving picture data, still picture data and sound data in response to an identification code. Consequently, it is possible to perform suitable decompression processing for each data, and the data can be read out correctly.

According to a sixth aspect of the present invention, there is provided a picture data writing and reading apparatus for compressing and writing fetched picture data into a memory card and reading out the image data from the memory card and decompressing the image data, comprising fetching means for fetching picture data and/or sound data, identification code application means for applying a first identification code to the fetched picture data when the fetched picture data is moving picture data but applying a second identification code to the fetched picture data when the fetched picture data is still picture data and applying a third identification code to the fetched sound data, writing and reading means for writing the moving picture data, still picture data and/or sound data together with the corresponding identification code or codes into the memory card and reading out the written data from the memory card, first compression and decompression means for compressing the fetched moving picture data and decompressing the read out moving picture data, second compression and decompression means for compressing the fetched still picture data and decompressing the read out still picture data, third compression and decompression means for compressing the fetched sound data and decompressing the read out sound data, and supply means for supplying the moving picture data, still picture data and/or sound data fetched or read out to the first compression and decompression means, second compression and decompression means and/or third compression and decompression means, respectively, in accordance with the identification code or codes.

According to a seventh aspect of the present invention, there is provided a picture data writing and reading method for compressing and writing fetched picture data into a memory card and reading out the image data from the memory card and decompressing the image data, comprising the steps of fetching picture data and/or sound data, applying a first identification code to the fetched picture data when the fetched picture data is moving picture data but applying a second identification code to the fetched picture data when the fetched picture data is still picture data and applying a third identification code to the fetched sound data, writing the moving picture data, still picture data and/or sound data together with the corresponding identification code or codes into the memory card and reading out the written data from the memory card, compressing the fetched moving picture data and decompressing the read out moving picture data, compressing the fetched still picture data and decompressing the read out still picture data, compressing the fetched sound data and decompressing the read out sound data, and supplying the moving picture data, still picture data and/or sound data fetched or read out in accordance with the identification code or codes so that the data may be compressed and decompressed in the first, second and/or third mentioned compression and decompression steps, respectively.

In the picture data writing and reading apparatus and the picture data writing and reading method, upon writing, a different identification code may be applied to each of moving picture data, still picture data and sound data, and the data is recorded together with the identification code. Then, upon reading, in response to the identification code, corresponding decompression processing can be performed for the moving picture data, still picture data or sound data. Consequently, moving picture data, still picture data and sound data can be handled in combination.

Accordingly, embodiments of the present invention can provide a picture data writing apparatus and method, a picture data reading apparatus and method, and a picture data writing and reading apparatus and method and by which a moving picture, a still picture and sound data can be written and read out in combination into and from a memory card.

Embodiments of the present invention can also provide a memory card on which a moving picture, a still picture and sound data are written in combination.

The above and other features and advantages of the present invention will become apparent from the following non-limitative description and the appended claims, taken in conjunction with the accompanying drawings in which like parts or elements are denoted by like reference characters. In the drawings:-
FIG. 1 is a block diagram showing an exemplary construction of a system to which a picture data writing and reading apparatus of the present invention is applied;
FIG. 2 is a block diagram showing an exemplary construction of a digital still camera of the system of FIG. 1;
FIG. 3 is a diagrammatic view illustrating a format of a memory card used in the system of FIG. 1;
FIG. 4 is a block diagram showing an exemplary construction of an image handler of the system of FIG. 1;
FIG. 5 is a diagrammatic view showing an example of a display of an index provided by the system of FIG. 1;
FIG. 6 is a block diagram showing another exemplary construction of the digital still camera of the system of FIG. 1;
FIG. 7 is a block diagram showing an exemplary construction of a portable sound memory reproduction unit of the system of FIG. 1;
FIG. 8 is a diagrammatic view illustrating another format of the memory card used in the system of FIG. 1;
FIG. 9 is a block diagram showing an exemplary construction of a ordinary digital still camera.

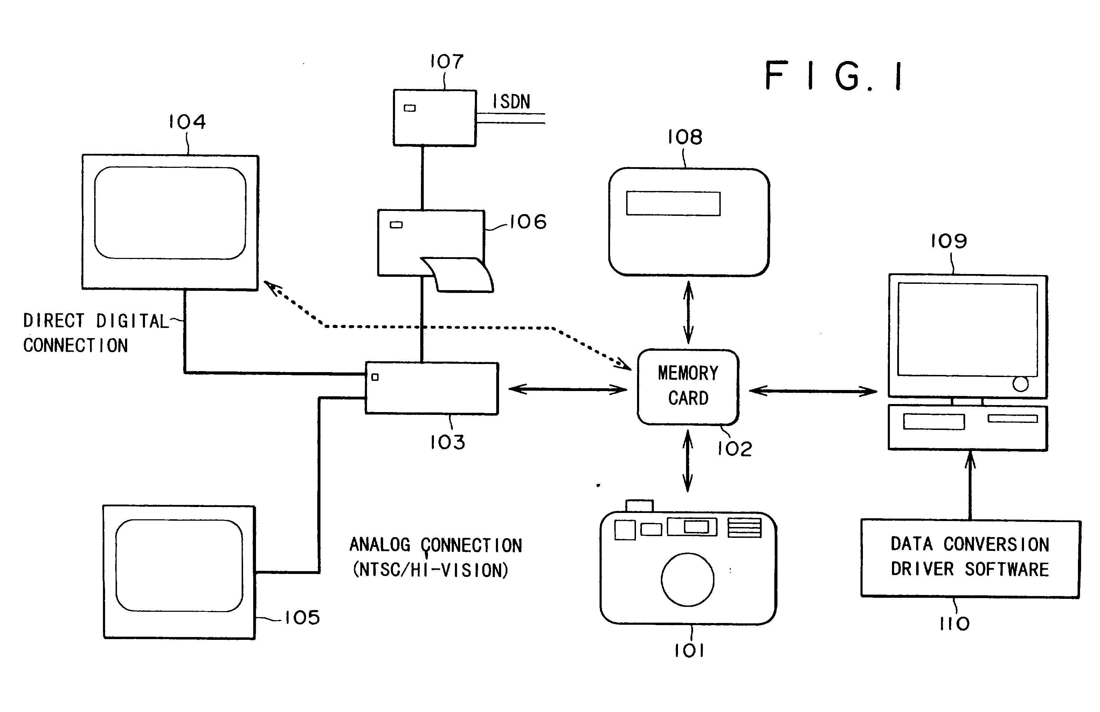

Referring first to FIG. 1, there is shown an exemplary construction of an entire system to which a picture data writing and reading apparatus of the present invention is applied. The system shown includes a digital still camera 101 which has a card slot not shown into which a memory card 102 formed from a small size memory card mentioned hereinabove can be removably loaded from the outside. A picture fetched into the digital still camera 101 is written into the memory card 102. The memory card 102 can be removed from the digital still camera 101 and loaded into a viewer (image handler) 103, a portable sound memory reproduction unit 108, a personal computer 109 or the like.

The image handler 103 is a reading apparatus for exclusive use for the memory card 102 in a sense, and supplies picture data read out from the memory card 102 in the form of a digital signal to a display unit (television receiver) 104 with a digital input so that it is displayed on the display unit 104. Or, the image handler 103 supplies an analog video signal to a display unit (television receiver) 105 so that it is displayed on the display unit 105.

The image handler 103 is connected to a printer 106 and a modem 107 by a bus prescribed, for example, in the IEEE (The Institute of Electrical and Electronic Engineers, Inc.) 1394. Accordingly, it is possible to transfer picture data read in from the memory card 102 by the image handler 103 to the printer 106 through the bus so that the picture data may be printed on paper or to transfer the picture data to the modem 107 so that it may be transmitted from the modem 107 to another apparatus via a telephone line such as an ISDN line.

On the other hand, where sound data is written in the memory card 102, the memory card 102 can be loaded into the portable sound memory reproduction unit 108 so that sound written therein can be reproduced and enjoyed similarly as with a sound reproduction apparatus for a magnetic disk, a cassette tape or the like.

Furthermore, it is also possible to load the memory card 102 into the personal computer 109 so that data of the memory card 102 is read out and processed making use of driver software 110 for data conversion.

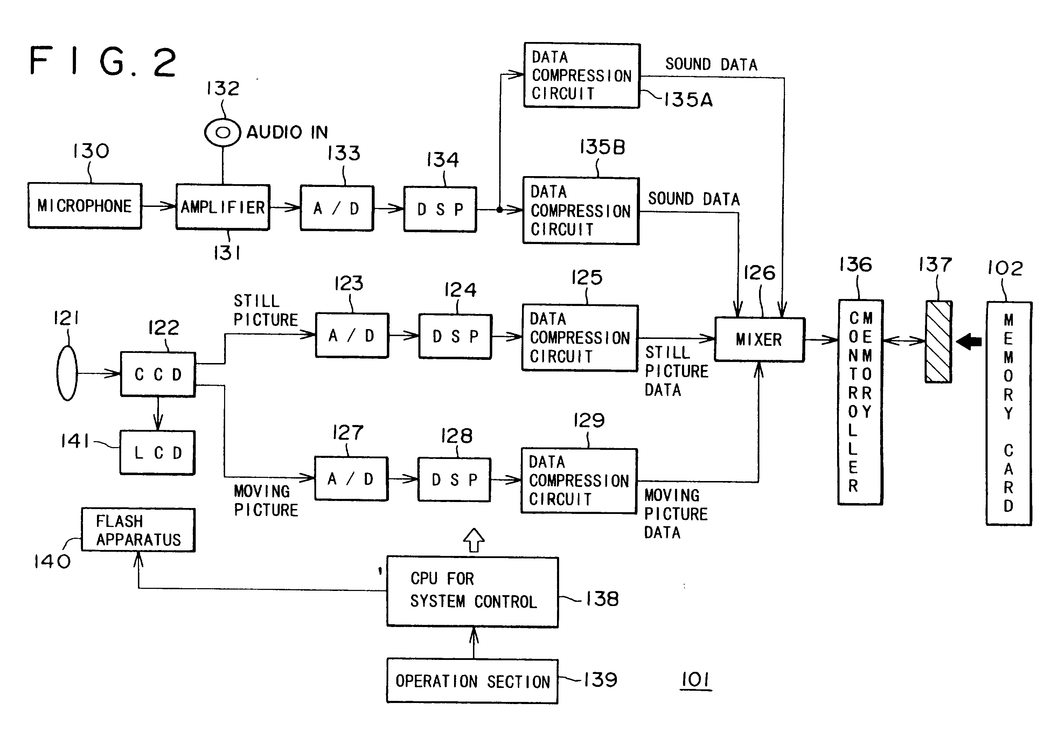

FIG. 2 shows an exemplary construction of the digital still camera 101. A picture fetched by a lens 121 is converted into a picture signal by a CCD 122, and still picture data is supplied to an A/D converter 123 whereas moving picture data is supplied to another A/D converter 127. Still picture data after analog to digital conversion by the A/D converter 123 is inputted to a DSP 124, by which processing of gamma correction is performed to produce a brightness signal Y and color difference signals Cb and Cr. Also an instruction inputted by manual operation of an operation section 139 by a user is inputted to the DSP 124 via a CPU 138. The DSP 124 can perform various editing processing in response to the instruction. Still picture data outputted from the DSP 124 is supplied to a data compression circuit 125, by which it is compressed in accordance with the JPEG system, whereafter it is supplied to a mixer 126.

On the other hand, moving picture data after analog to digital conversion by the A/D converter 127 is supplied to a DSP 128. The DSP 128 executes similar processing to that of the DSP 124. The moving picture data outputted from the DSP 128 is supplied to a data compression circuit 129, by which it is compressed in accordance with the MPEG (Moving Picture Experts Group) system.

A flash apparatus 140 is controlled by the CPU 138 and irradiates flash light upon an imaging object when the imaging object is to be imaged as a still picture. Further, the CCD 122 outputs fetched picture data to an LCD 141 so as to be displayed on the LCD 141. Consequently, the user can confirm the imaging object.

The microphone 130 fetches a sound signal from around an imaging object. The microphone 130 can fetch an electric sound signal also from a terminal 132. An amplifier 131 amplifies a sound signal inputted from the microphone 130 or the terminal 132 and supplies it to an A/D converter 133. The A/D converter 133 first performs analog to digital conversion of an inputted sound signal and supplies a resulting signal to a DSP 134. The DSP 134 adds various effect processing to a sound signal in response to an instruction from the CPU 138. Sound data outputted from the DSP 134 is supplied to a data compression circuit 135A, by which it is compressed, for example, in accordance with the WAVE system which is prescribed as a sound file of the Windows (trademark), whereafter it is outputted to the mixer 126. Further, sound data outputted from the DSP 134 is compressed in accordance with the MPEG system by a data compression circuit 135B, from which it is outputted to the mixer 126.

The mixer 126 mixes still picture data supplied from the data compression circuit 125, moving picture data supplied from the data compression circuit 129 and sound data inputted from the data compression circuit 135A or 135B and supplies resulting data to a memory controller 136. The memory controller 136 writes the mixed data supplied from the mixer 126 into the memory card 102 loaded in a connector 137.

Subsequently, operation of the apparatus is described. A user can manually operate the operation section 139 to direct one of recording operations of five kinds of a still picture, a moving picture, a still picture and a moving picture, a moving picture and sound, and mere sound. The CPU 138 sets one of the five kinds of recording operations in response to an input from the operation section 139 so that the recording operation may be executed.

For example, when recording of a still picture is directed, the CPU 138 drives the flash apparatus 140 at a predetermined timing to irradiate flash light toward an imaging object. Light from the imaging object is fetched by the CCD 122 through the lens 121. Still picture data outputted from the CCD 122 is converted from analog data into digital data by the A/D converter 123 and then inputted to the DSP 124, by which gamma correction processing is performed. Further, brightness data and color difference data are produced by the DSP 124. In this instance, the DSP 124 further generates an identification code representing that the data being recorded at present is still picture data. The picture data (brightness data and color difference data) and the identification code outputted from the DSP 124 are compressed in accordance with the JPEG system by the data compression circuit 125. The still picture data compressed by the data compression circuit 125 is supplied to the memory controller 136 through the mixer 126. The memory controller 136 writes the inputted still picture data into the memory card 102.

On the other hand, when recording of moving picture data is directed, the flash apparatus 140 is not used, and pictures of an imaging object are fetched by the CCD 122 for a time corresponding to a time for which the operation section 139 is operated. The moving picture data are converted from analog data into digital data by the A/D converter 127, gamma corrected by the DSP 128 and then converted into brightness data and color difference data. Further, the DSP 128 adds to the picture data an identification code representing that the picture data is moving picture data. The data compression circuit 129 compresses the picture data outputted from the DSP 128 in accordance with the MPEG system and outputs the compressed picture data to the memory controller 136 through the mixer 126. The memory controller 136 writes the inputted moving picture data into the memory card 102.

When recording of sound is directed, a sound signal fetched from the microphone 130 or the terminal 132 is inputted through the amplifier 131 to the A/D converter 133, by which it is converted from an analog signal into a digital signal, whereafter it is inputted to the DSP 134. The DSP 134 adds to the inputted sound data an identification code representing that the data is sound data, and supplies resulting data to the data compression circuit 135A. The data compression circuit 135A compresses the inputted sound data in accordance with the WAVE system and outputs resulting data to the memory controller 136 through the mixer 126. The memory controller 136 writes the inputted sound data into the memory card 102.

While the foregoing description relates to operation when still picture data, moving picture data or sound data is recorded individually into the memory card 102, when recording of both of still picture data and sound data is directed, still picture data outputted from the data compression circuit 125 and sound data outputted from the data compression circuit 135A are mixed by the mixer 126 and then supplied to the memory controller 136. Then, the memory controller 136 writes the still picture data and sound data in a corresponding relationship to each other into the memory card 102.

Similarly, when recording of moving picture data and sound data are instructed, the mixer 126 mixes moving picture data supplied from the data compression circuit 129 and sound data supplied from the data compression circuit 135B and compressed in accordance with the MPEG system and supplies the mixed data to the memory controller 136. The memory controller 136 writes the moving picture data and sound data in a corresponding relationship into the memory card 102 in such a manner as to allow synchronous reproduction of them.

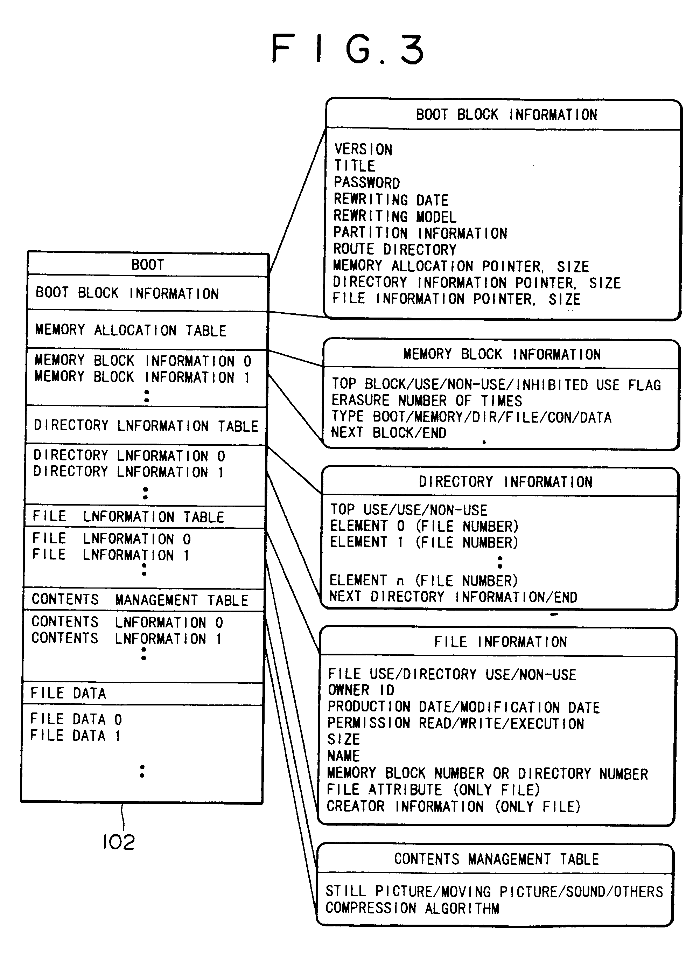

FIG. 3 illustrates a format of the memory card 102. Referring to FIG. 3, boot block information, a memory allocation table, a directory information table, a file information table, a contents management table and file data are produced in the memory card 102.

As the boot block information, a version of the memory card, a title, a password, a rewriting date, a rewriting model, partition information, a root directory, a memory allocation pointer and size, a directory information pointer and size, a file information pointer and size, and so forth are recorded.

In the memory allocation table, information of an arbitrary number of memory blocks is recorded. In the information of each memory block, a top block of the block, a flag of use, non-use or inhibited use of the block, a number of times of erasure, a type of the block (a boot, a memory, a directory, a file, contents management or data), whether a following block exists or this block is the last block, and so forth are recorded. A series of data can be read out by tracing a block described in this memory block.

In the directory information table, information of an arbitrary number of directories is recorded. In the information of each directory, in addition to a flag representing whether the directory is used at the top, used or not used, file numbers are described as an element 0 to an element n. Further, where next directory information is present, this is described, but where the directory is the last directory, a flag representing this is described.

In the file information table, information of an arbitrary number of files is described. In the information of each file, in addition to a flag representing that the file is in use and another flag representing that a directory is used or a further representing that no directory is used, an owner ID, a production date, an end date and so forth are recorded. Further, permission of reading, writing or execution, a size, a name, a memory block number or directory number, a file attribute, creator information and so forth are recorded.

In the contents management table, information of an arbitrary number of contents is recorded. In the information of each of the contents, a data identification code for identification of still picture data, moving picture data, sound data and other data, and a compression method identification code for identification of a compression algorithm are recorded.

In the file data, data of an arbitrary number of files are recorded. Here, moving picture data, still picture data, sound data and so forth are recorded.

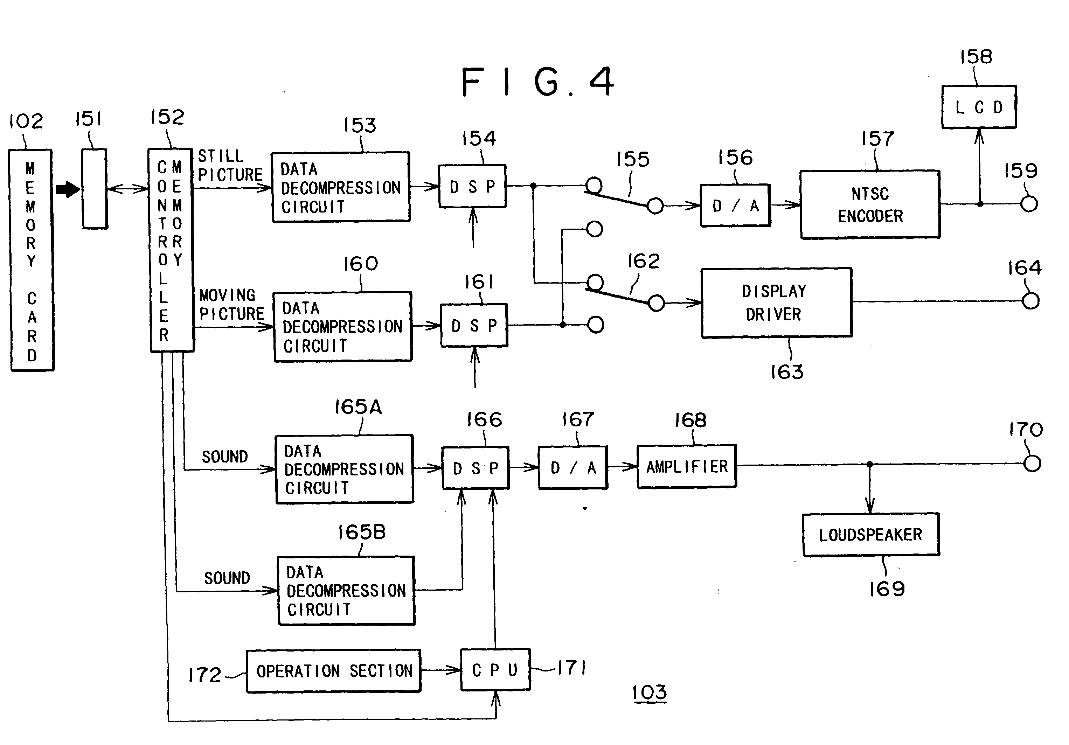

FIG. 4 shows an exemplary construction of the image handler 103. Referring to FIG. 4, the memory card 102 is loaded into a connector 151. A memory controller 152 refers to data identification codes and compression method identification codes of the contents management table and supplies, from among the data read out from the memory card 102, still picture data to a data decompression circuit 153, moving picture data to a data decompression circuit 160, sound data compressed in accordance with the WAVE system to a data decompression circuit 165A, and sound data compressed in accordance with the MPEG system to a data decompression circuit 165B.

The data decompression circuit 153 decompresses the data using a decompression method of the JPEG system corresponding to the compression method of the data compression circuit 125 and outputs resulting data to a DSP 154. The DSP 154 is controlled by a CPU 171 and performs various data processing, and outputs resulting data to a D/A converter 156 and a display driver 163 via switches 155 and 162, respectively.

The data decompression circuit 160 performs decompression processing of the MPEG system corresponding to that of the data compression circuit 129 of FIG. 2 and outputs decompressed moving picture data to a DSP 161. The DSP 161 processes the inputted moving picture data and outputs resulting data to the D/A converter 156 or the display driver 163 via the switch 155 or 162.

The D/A converter 156 converts still picture data or moving picture data inputted thereto through the switch 155 from digital data into analog data and outputs the analog data to an NTSC encoder 157. The NTSC encoder 157 converts the still picture data or moving picture data inputted thereto into an analog video signal of the NTSC system and outputs the analog video signal to an LCD 158 so as to be displayed on the LCD 158. Further, the NTSC encoder 157 outputs the analog video signal to the display unit 105 of the analog type of FIG. 1 through a terminal 159.

The display driver 163 amplifies the still picture data or moving picture data inputted thereto through the switch 162 and outputs it to the display unit 104 of the digital type connected thereto through a terminal 164.

The data decompression circuit 165A decompresses sound data inputted thereto in accordance with the WAVE system corresponding to the compression method of the data compression circuit 135A of FIG. 2. In particular, where only sound data (to which picture data is not attached) is inputted, the decompression processing is performed in accordance with the WAVE system. Further, even if picture data is attached, if the picture data is still picture data, then it is decompressed in accordance with the WAVE system similarly as in the case wherein no picture data is attached. In contrast, sound data to which moving picture data is attached is inputted to the data decompression circuit 165B, by which decompression processing in accordance with the MPEG system is performed corresponding to the data compression circuit 135B of FIG. 2.

Sound data outputted from the data decompression circuit 165A or 165B is inputted to a DSP 166, by which predetermined processing is performed. Thereafter, the sound data is converted from digital data into analog data by a D/A converter 167. Then, the analog data is either outputted to a loudspeaker 169 through an amplifier 168 or outputted to a loudspeaker (not shown) built in the display unit 104 or 105 through a terminal 170.

The DSPs 154, 161 and 166 are controlled by the CPU 171. Various instructions are inputted from an operation section 172 to the CPU 171.

Subsequently, operation of the system is described. If a user manually operates the operation section 172 to direct to display indices of data stored in the memory card 102, the CPU 171 accesses the memory card 102 through the memory controller 152 to read out files recorded in the memory card 102. Data of the files read out are discriminated into still picture data, moving picture data, sound data of the WAVE system and/or sound data of the MPEG system by the memory controller 152 and supplied to the data decompression circuits 153, 160, 165A and/or 165B, respectively. Then, after decompression processing is performed by the individual decompression circuits, the data are supplied to the corresponding DSPs 154, 161 and/or 166, respectively.

The DSP 154 for still picture data contracts the inputted still picture in size and outputs resulting data. Meanwhile, the DSP 161 for moving picture data contacts the top picture of moving pictures in size and outputs a resulting picture.

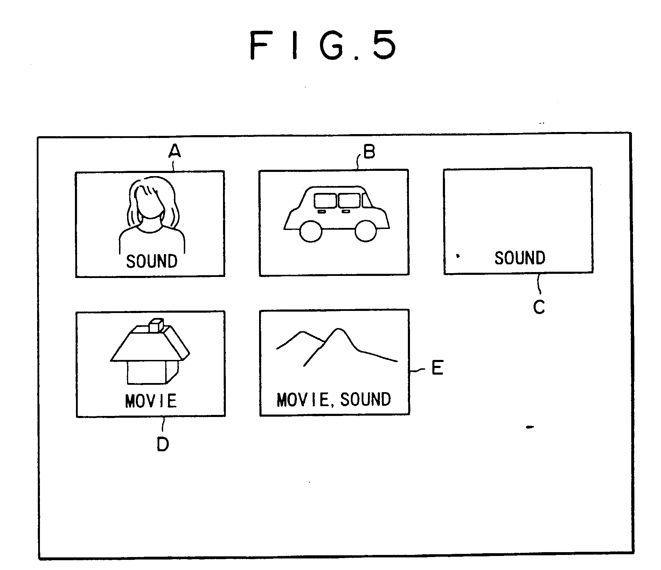

The CPU 171 discriminates from an output of the memory controller 152 whether or not sound data is attached to the still picture data read out. Where sound data is attached to the still picture data, the CPU 171 controls the DSP 154 to output the characters of "SOUND" in a superposed relationship with the contracted picture. Where sound data is not attached to the still picture data, the characters are not superposed. Consequently, for example, when sound is attached to the sill picture, as indicated as an index A in FIG. 5, the contracted picture with which the characters of "SOUND" are superposed is displayed. In contrast, where sound is not attached to the still picture data, as indicated as another index B in FIG. 5, only the contracted still picture is displayed.

Further, the CPU 171 controls, where the moving picture data has corresponding sound data, the DSP 161 for moving pictures to reduce the size of the top picture of the moving picture data read out and superpose the characters of "MOVIE" and the characters of "SOUND" with the contacted picture data. On the other hand, where the moving picture data are not accompanied by sound data, only the characters of "MOVIE" are superposed. Consequently, for example, an index of moving pictures accompanied by sound data is displayed, as indicated as an index E in FIG. 5, as a contracted picture of the top of moving pictures with which the characters of "MOVIE" and the characters of "SOUND" are superposed. On the other hand, where the moving picture data is accompanied by no sound data, as indicated as an index D, a contracted picture of the top of the moving pictures and the characteristics of "MOVIE" are displayed in a superposed relationship.

Furthermore, the CPU 171 discriminates whether or not the sound data read out corresponds to the picture data. If it discriminates that the sound data does not correspond to the picture data, then the CPU 171 controls the DSP 154 to generate the characters of "SOUND" and a plain background picture of a single color and superpose them with each other. Consequently, for example, as indicated by an index C of FIG. 5, an index wherein the characters of "SOUND" are superposed with a plain background picture of a single color is displayed.

In such a manner as described above, the user can readily know from an index whether each file includes only a still picture, a still picture to which sound is attached, only a moving picture, a moving picture to which sound is attached or only sound.

It is to be noted that the characters of "SOUND" or "MOVIE" are a mere example, and in summary, any symbol can be used from which contents of data can be recognized readily by a user.

Then, if the user manually operates the operation section 172 to designate one of the displayed indices (for example, the index B) and direct reading out of corresponding still picture data, then the CPU 171 controls the memory controller 152 to reproduce still picture data stored in the memory card 102. The still picture data is inputted to the data decompression circuit 153, by which decompression processing is performed therefor, and then, predetermined processing is performed therefor by the DSP 154. The still picture data outputted from the DSP 154 is inputted through the switch 155 to the D/A converter 156, by which D/A conversion thereof is performed. Then, the still picture data is supplied to the NTSC encoder 157. The NTSC encoder 157 converts the still picture signal inputted thereto into a video signal of the NTSC system and then outputs the video signal to the LCD 158 so as to be displayed on the LCD 158. Or else, the NTSC encoder 157 outputs the video signal to the display unit 105 of the analog system connected to the terminal 159 so as to be displayed on the display unit 105.

The still picture data outputted from the DSP 154 is inputted also to the display driver 163 through the switch 162. The display driver 163 outputs the still picture data inputted thereto through the terminal 164 to the display unit 104 of the digital system so as to be displayed on the display unit 104.

If an index (for example, an index C) which includes only sound data is designated, then the memory controller 152 reads out corresponding sound data from the memory card 102 and outputs the sound data to the data decompression circuit 165A. The data decompression circuit 165A decompresses the sound data in accordance with the WAVE system and outputs resulting data to the DSP 166. The sound data after the predetermined processing has been performed by the DSP 166 is converted from digital data into analog data by the D/A converter 167 and then amplified by the amplifier 168, whereafter it is outputted from the loudspeaker 169. Further, the sound signal outputted from the amplifier 168 is outputted to the loudspeaker of the display unit 104 or 105.

If an index (for example, the index A) of still picture data to which sound data corresponds is designated, then still picture data is outputted to the data decompression circuit 153 while sound data is outputted to the data decompression circuit 165A. Then, a still picture is displayed and sound is outputted in a similar manner as in the case described above.

If an index (for example, the index D) which includes only moving picture data without being accompanied by sound data is designated, then the memory controller 152 reads out corresponding moving picture data from the memory card 102 and outputs the moving picture data to the data decompression circuit 160. The data decompression circuit 160 decompresses the moving picture data inputted thereto in accordance with the MPEG system and outputs resulting data to the DSP 161. The DSP 161 processes the moving picture data inputted thereto and inputs the processed moving picture data to the D/A converter 156 through the switch 155, by which it is converted from digital data into analog data. The analog data is supplied to the NTSC encoder 157. The NTSC encoder 157 converts the moving picture signal inputted thereto into a video signal of the NTSC system and causes the LCD 158 to display the moving picture signal. The NTSC encoder 157 further outputs the video signal through the terminal 159 to the analog display unit 105 so as to be displayed on the analog display unit 105.

Meanwhile, the moving picture data outputted from the DSP 161 is outputted from the display driver 163 through the terminal 164 to the display unit 104 so as to be displayed on the display unit 104.

Furthermore, if an index (for example, the index E) of moving picture data accompanied by sound data is designated, then the memory controller 152 reads corresponding data from the memory card 102 and outputs moving picture data to the data decompression circuit 160 while it outputs sound data to the data decompression circuit 165B. The moving picture data is processed in a similar manner as in the case wherein only moving picture data is reproduced, and is displayed on the LCD 158, the display unit 104 or 105 or the like.

Meanwhile, the sound data is inputted to the data decompression circuit 165B. The data decompression circuit 165B decompresses the sound data in accordance with the MPEG system. This decompression processing is performed in synchronism with the decompression processing of the moving picture data by the data decompression circuit 160.

The sound data outputted from the data decompression circuit 165B is converted from digital data into analog data by the D/A converter 167 after predetermined processing is performed therefor by the DSP 166. The amplifier 168 outputs the sound signal outputted from the D/A converter 167 to the loudspeaker 169 and outputs the sound signal to the loudspeaker of the display unit 104 or 105 through the terminal 170. Consequently, a moving picture and sound synchronized with each other can be enjoyed.

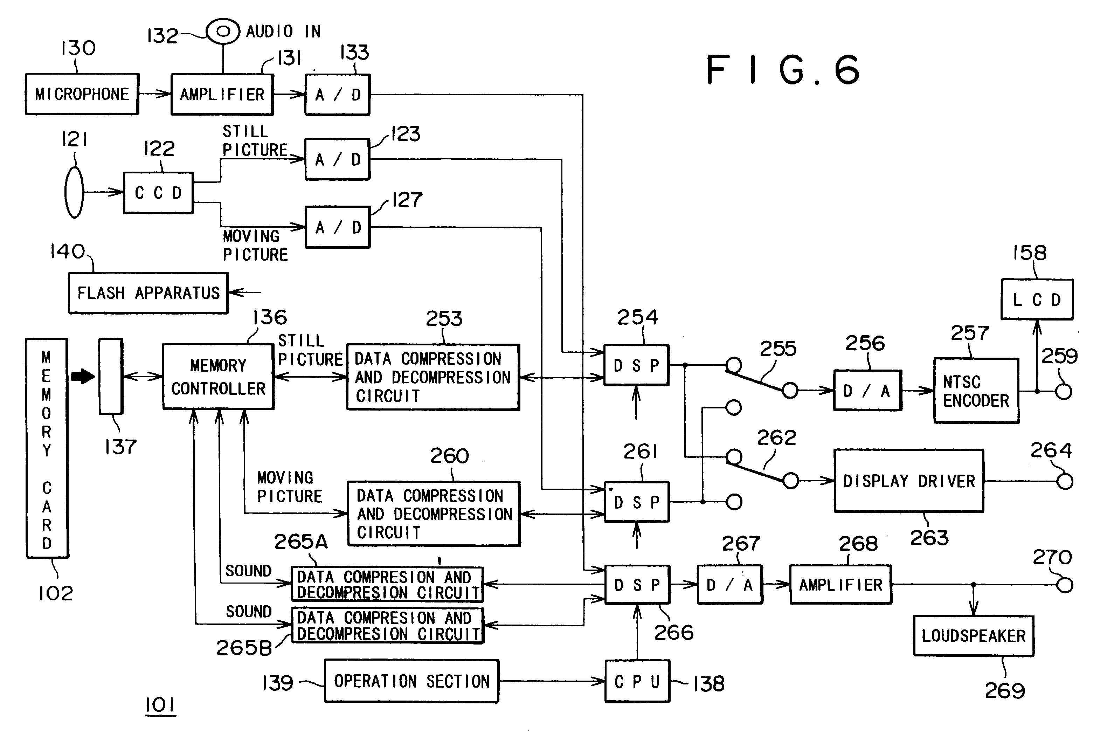

FIG. 6 shows another exemplary construction of the digital still camera 101. Referring to FIG. 6, the digital still camera 101 shown is generally constructed such that it not only can fetch and write a picture into the memory card 102, but also can read out data written in the memory card 102 and output the data to the display unit 104 or 105 so as to be displayed. In particular, in the arrangement shown in FIG. 6, still picture data fetched by the CCD 122 is first converted from analog data into digital data by the A/D converter 123 and then supplied to a data compression and decompression circuit 253 through a DSP 254. The still picture data is compressed in accordance with the JPEG system by the data compression and decompression circuit 253 and then written into the memory card 102 through the memory controller 136.

The moving picture data is supplied, after converted from analog data into digital data by the A/D converter 127, through a DSP 261 to a data compression and decompression circuit 260, by which it is compressed in accordance with the MPEG system. The compressed moving picture data is supplied to and written into the memory card 102 through the memory controller 136.

Meanwhile, the sound signal inputted from the microphone 130 or the terminal 132 is inputted through the amplifier 131 to the A/D converter 133, by which it is converted from an analog signal into a digital signal. The digital signal is inputted to a data compression and decompression circuit 265A or 265B through a DSP 266. The data compression and decompression circuit 265A compresses the sound data in accordance with the WAVE system, but the data compression and decompression circuit 265B compresses the sound data in accordance with the MPEG system. The sound data compressed by the data compression and decompression circuit 265A or 265B is written into the memory card 102 through the memory controller 136.

When reading out is directed, the memory controller 136 reads out data from the memory card 102 and outputs still picture data, moving picture data, and/or sound data of the WAVE compression system or sound data of the MPEG compression system to the data compression and decompression circuit 253, data compression and decompression circuit 260, and/or data compression and decompression circuit 265A or data compression and decompression circuit 265B, respectively.

The data compression and decompression circuit 253 decompresses the inputted still picture data and outputs resulting data to the DSP 254. The still picture data to which predetermined processing has been performed by the DSP 254 is converted from digital data into analog data by a D/A converter 256 through a switch 255 and then converted into a video signal of the NTSC system by an NTSC encoder 257. The video signal is displayed on the LCD 158 and is further outputted to the display unit 105 through a terminal 259 so as to be displayed on the display unit 105.

Meanwhile, the still picture data outputted from the DSP 254 is outputted to the display unit 104 through a switch 262, a display driver 263 and a terminal 264.

The moving picture data decompressed by the data compression and decompression circuit 260 is outputted, after predetermined processing has been performed therefor by the DSP 261, to and displayed on the display unit 105 or display unit 104 similarly as in the case of the still picture data.

The sound data decompressed by the data compression and decompression circuit 265A or 265B is converted from digital data into analog data by a D/A converter 267 after predetermined processing is performed therefor by the DSP 266. Then, the sound signal outputted from the D/A converter 267 is outputted to a loudspeaker 269 through an amplifier 268 and is further outputted to the display unit 104 or 105 through a terminal 270.

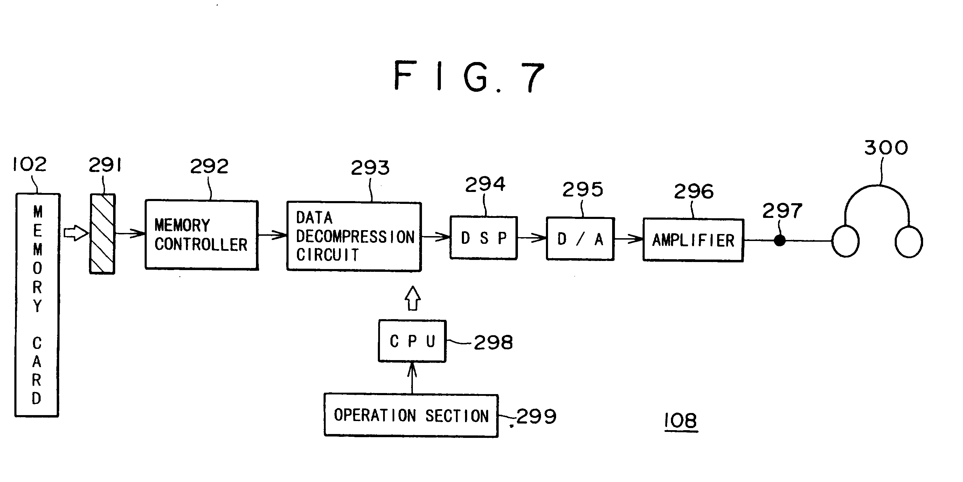

FIG. 7 shows an example of a construction of the portable sound memory reproduction unit 108. Referring to FIG. 7, in the arrangement shown, the memory card 102 is loaded into a connector 291. A memory controller 292 reads out, if a user manually operates an operation section 299 to direct reproduction, sound picture stored in the memory card 102 in response to the instruction from a CPU 298 and outputs the sound data to a data decompression circuit 293. The data decompression circuit 293 decompresses the sound data in accordance with the WAVE system. In particular, sound data which is not accompanied by moving picture data is decompressed, or even if sound data is accompanied by picture data, if the picture data is still picture data, then the sound data is decompressed.

A DSP 294 performs predetermined processing for the sound data outputted from the data decompression circuit 293 and outputs resulting data to a D/A converter 295. The D/A converter 295 converts the inputted sound data from analog data into digital data and outputs the digital data to a terminal 297 through an amplifier 296. A headphone 300 is connected to the terminal 297 so that a user can listen to sound from the headphone 300.

In the system of the embodiment described above, data stored in the memory card 102 is stored in accordance with such a format as shown in FIG. 3. Accordingly, in order to load and reproduce it into and on the personal computer 109, driver software for exclusive use is required as the driver software 110.

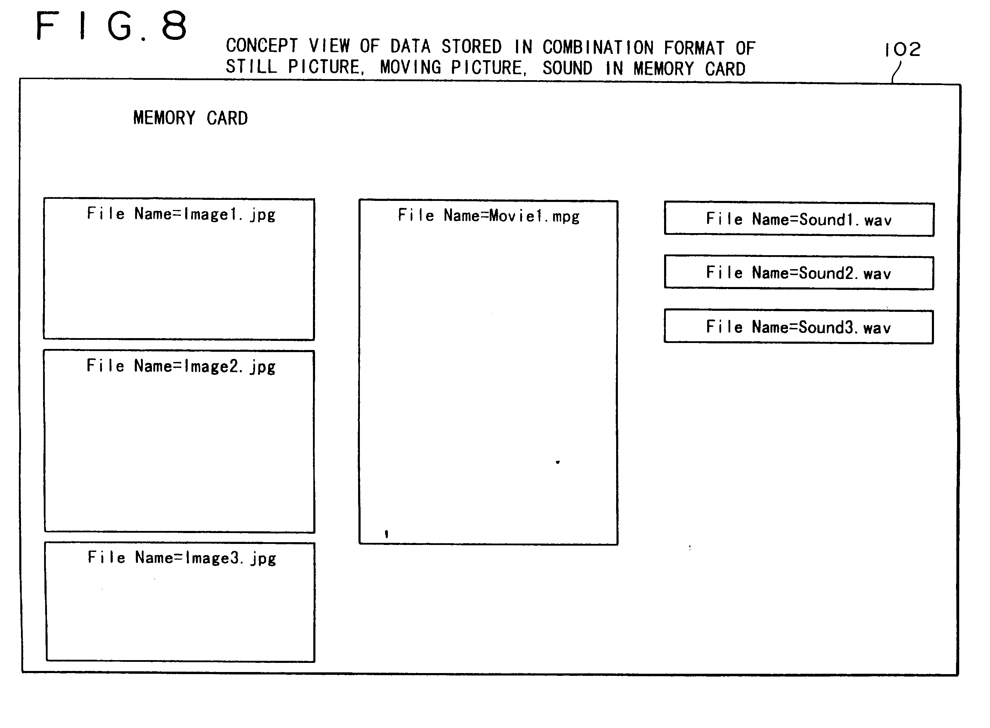

In contrast, if the format of data to be recorded on the memory card 102 is defined, for example, in such a manner as illustrated in FIG. 8, then data of five kinds can be managed as ordinary files using application software of a DOS (disc operating system) used normally by the personal computer 109.

In this instance, as seen in FIG. 8, an extension is added as an identification code to the last of a file name of each data. This extension is, where the file includes only still picture data, .jpg or .jpeg. Sound data is recorded as a sound file of the Windows, and .wav is used as an extension for it.

The extension of a file of moving pictures is .mpg or .mpeg. It is to be noted that, where the data of moving pictures is accompanied by sound data, the data of moving pictures includes not only moving picture data but also the sound data.

In the display example of FIG. 8, still picture files of Imagel.jpg to Image3.jpg and a moving picture file of Moviel.mpg (this moving picture file either includes only moving picture data or includes moving picture data and accompanying sound data) are present. Further, three sound data files of Soundl.wav to Sound3.wav are present.

It is to be noted that, while, in the embodiment described above, only an identification code for identification of data is added, where not only the MPEG system but also a plurality of compression and decompression systems are present, for example, for moving picture data, it is naturally possible to add a compression method identification code for identification of the compression and decompression system. In particular, in this instance, a flag of a compression algorithm of the contents management table of FIG. 3 is utilized.

Having now fully described the invention, it will be apparent to one of ordinary skill in the art that many changes and modifications can be made thereto without departing from the spirit and scope of the invention as set forth herein.

## Claims

1. A picture data writing apparatus for writing fetched picture data into a memory card, comprising:
first fetching means for fetching picture data;
second fetching means for fetching sound data;
identification code application means for applying a first identification code to the fetched picture data when the fetched picture data is moving picture data but applying a second identification code to the fetched picture data when the fetched picture data is still picture data and applying a third identification code to the fetched sound data; and
writing means for writing the moving picture data, still picture data and/or sound data into said memory card together with the corresponding identification code or codes.

2. A picture data writing apparatus according to claim 1, further comprising compression means for compressing the moving picture data, still picture data and sound data.

3. A picture data writing apparatus according to claim 2, wherein said writing means further writes a compression code representative of a compression method of each of the moving picture data, still picture data and sound data into said memory card.

4. A picture data writing apparatus according to claim 2 or 3, wherein said compression means compresses the moving picture data in accordance with an MPEG system and compresses the still picture data in accordance with a JPEG system.

5. A picture data writing apparatus according to claim 2 or 3, wherein said compression means compresses the sound data in accordance with the WAVE system where the moving picture data is attached to the sound data, but in any other case, compresses the sound data in accordance with the MPEG system.

6. A picture data writing apparatus according to any one of the preceding claims, wherein said writing means writes the identification code or codes collectively into a table.

7. A picture data writing apparatus according to any one of the preceding claims, wherein said writing means writes the identification code into part of a name of each of the corresponding moving picture data, still picture data and sound data.

8. A picture data writing apparatus according to any one of the preceding claims further comprising selection means for selecting a combination of data to be written into said memory card, and control means for controlling a writing operation in response to an output of said selection means.

9. A picture data writing apparatus according to claim 8, wherein said selection means is capable of selecting one of five combinations of a still picture, a moving picture, a still picture and sound, a moving picture and sound, and sound only.

10. A picture data writing apparatus according to any one of the preceding claims, wherein said picture data writing apparatus is a digital still camera.

11. A picture data writing method for writing fetched picture data into a memory card, comprising the steps of:
fetching picture data;
fetching sound data;
applying a first identification code to the fetched picture data when the fetched picture data is moving picture data but applying a second identification code to the fetched picture data when the fetched picture data is still picture data and applying a third identification code to the fetched sound data; and
writing the moving picture data, still picture data and/or sound data together with the corresponding identification code or codes into said memory card.

12. A memory card in which fetched picture data is recorded, wherein moving picture data, still picture data and/or sound data compressed in accordance with a predetermined method are recorded together with a data identification code or codes for identification among the data in said memory card.

13. A memory card according to claim 12, wherein a compression method identification code for identification of the compression method of each of the moving picture data, still picture data and sound data is further recorded therein.

14. A picture data reading apparatus for reading out a memory card in which moving picture data, still picture data and/or sound data compressed by a predetermined method or methods are recorded together with a data identification code or codes for identification among the data, comprising:
reading means for reading out data from said memory card;
first decompression means for decompressing the moving picture data read out by said reading means;
second decompression means for decompressing the still picture data read out by said reading means;
third decompression means for decompressing the sound data read out by said reading means; and
supply means for supplying the read out moving picture data, still picture data and/or sound data to said first decompression means, second decompression means and/or third decompression means, respectively, in accordance with the identification code or codes.

15. A picture data reading apparatus according to claim 14, further comprising display control means for causing a symbol for identification of each of the moving picture data, still picture data and/or sound data to be displayed.

16. A picture data reading apparatus according to claim 14 or 15, further comprising an NTSC encoder for encoding the moving picture data or the still picture data into a video signal of the NTSC system.

17. A picture data reading apparatus according to any one of claims 14 to 16, further comprising display control means for causing the moving picture data and/or the still picture data to be displayed as a plurality of child screens.

18. A picture data reading apparatus according to claim 17, further comprising selection means for selecting one of the moving picture data and/or the still picture data displayed as a plurality of child screens.

19. A picture data reading method for reading out a memory card in which moving picture data, still picture data and/or sound data compressed by a predetermined method or methods are recorded together with a data identification code or codes for identification among the data, comprising the steps of:
reading out data from said memory card;
decompressing the moving picture data read out;
decompressing the still picture data read out;
decompressing the sound data read out; and
supplying the read out moving picture data, still picture data and/or sound data in accordance with the identification code or codes so that the data may be decompressed in the first decompression step, second decompression step and/or third decompression step, respectively.

20. A picture data writing and reading apparatus for compressing and writing fetched picture data into a memory card and reading out the image data from said memory card and decompressing the image data, comprising:
fetching means for fetching picture data and/or sound data;
identification code application means for applying a first identification code to the fetched picture data when the fetched picture data is moving picture data but applying a second identification code to the fetched picture data when the fetched picture data is still picture data and applying a third identification code to the fetched sound data;
writing and reading means for writing the moving picture data, still picture data and/or sound data together with the corresponding identification code or codes into said memory card and reading out the written data from said memory card;
first compression and decompression means for compressing the fetched moving picture data and decompressing the read out moving picture data;
second compression and decompression means for compressing the fetched still picture data and decompressing the read out still picture data;
third compression and decompression means for compressing the fetched sound data and decompressing the read out sound data; and
supply means for supplying the moving picture data, still picture data and/or sound data fetched or read out to said first compression and decompression means, second compression and decompression means and/or third compression and decompression means, respectively, in accordance with the identification code or codes.

21. A picture data writing and reading apparatus according to claim 20, wherein said picture data writing and reading apparatus is a digital still camera.

22. A picture data writing and reading method for compressing and writing fetched picture data into a memory card and reading out the image data from said memory card and decompressing the image data, comprising the steps of:
fetching picture data and/or sound data;
applying a first identification code to the fetched picture data when the fetched picture data is moving picture data but applying a second identification code to the fetched picture data when the fetched picture data is still picture data and applying a third identification code to the fetched sound data;
writing the moving picture data, still picture data and/or sound data together with the corresponding identification code or codes into said memory card and reading out the written data from said memory card;
compressing the fetched moving picture data and decompressing the read out moving picture data;
compressing the fetched still picture data and decompressing the read out still picture data;
compressing the fetched sound data and decompressing the read out sound data; and
supplying the moving picture data, still picture data and/or sound data fetched or read out in accordance with the identification code or codes so that the data may be compressed and decompressed in the first, second and/or third mentioned compression and decompression steps, respectively.

23. A memory card system, comprising:
a memory card; and
a picture data writing apparatus for writing fetched picture data into said memory card;
said picture data writing apparatus including first fetching means for fetching picture data, second fetching means for fetching sound data, identification code application means for applying a first identification code to the fetched picture data when the fetched picture data is moving picture data but applying a second identification code to the fetched picture data when the fetched picture data is still picture data and applying a third identification code to the fetched sound data, and writing means for writing the moving picture data, still picture data and/or sound data into said memory card together with the corresponding identification code or codes.

24. A memory card system, comprising:
a memory card in which moving picture data, still picture data and/or sound data compressed by a predetermined method or methods are recorded together with a data identification code or codes for identification among the data; and
a picture data reading apparatus for reading out data from said memory card;
said picture data reading apparatus including reading means for reading out data from said memory card, first decompression means for decompressing the moving picture data read out by said reading means, second decompression means for decompressing the still picture data read out by said reading means, third decompression means for decompressing the sound data read out by said reading means, and supply means for supplying the read out moving picture data, still picture data and/or sound data to said first decompression means, second decompression means and/or third decompression means, respectively, in accordance with the identification code or codes.

25. A system, comprising:
a memory card in which moving picture data, still picture data and/or sound data compressed by a predetermined method or methods are recorded together with a data identification code or codes for identification among the data;
a picture data reading apparatus for reading out data from said memory card; and
an apparatus connected to said picture data reading apparatus by a bus for receiving the data read out from said memory card by said picture data reading apparatus;
said picture data reading apparatus including reading means for reading out data from said memory card, first decompression means for decompressing the moving picture data read out by said reading means, second decompression means for decompressing the still picture data read out by said reading means, third decompression means for decompressing the sound data read out by said reading means, and supply means for supplying the read out moving picture data, still picture data and/or sound data to said first decompression means, second decompression means and/or third decompression means, respectively, in accordance with the identification code or codes.
